# EUROPEAN PATENT SPECIFICATION

(11) **EP 3 896 344 B1**
(45) Date of publication and mention of the grant of the patent: **13.03.2024**
(21) Application number: 21167396.7
(22) Date of filing: 08.04.2021
(51) Int. Cl.: F28F 1/02, F24C 15/32, A47L 15/42, F22B 9/06, A21B 3/04

(54) **GAS-FIRED SATURATED STEAM GENERATOR**
GASBEFEUERTER SATTDAMPFERZEUGER
GÉNÉRATEUR DE VAPEUR SATURÉE ALIMENTÉ AU GAZ

(30) Priority: 16.04.2020 IT 202000008047
(43) Date of publication of application: 20.10.2021
(73) Proprietor: STEELFORM Srl, 33061 Rivignano Teor UD (IT)
(72) Inventor: TESOLAT, Stefano, 33074 Fontanafredda (PN) (IT); TURRA, Luca, 33061 Rivignano Teor (IT); ODORICO, Angelo, 33061 Rivignano Teor (IT)
(74) Representative: Cercenà, Alice

(56) References cited:
- WO-A1-89/09363
- AT-B- 237 645
- DE-A1- 1 576 794
- SE-B- 342 309
- SE-B- 402 634
- US-A- 4 627 388
- US-A- 4 817 582
- US-B2- 9 557 075

## Description

### TECHNICAL FIELD OF INVENTION

The present invention is relative to a gas-fired steam generator adapted to generate saturated steam applicable in devices with which a treatment with saturated steam is carried out.

In particular, a gas-fired saturated steam generator according to the present invention is adapted to be incorporated in devices of domestic and professional type and also in community facilities, where steam is used for the heat treatment of food products, tableware, cutlery or other objects.

If necessary, said gas-fired steam generator can also be used for the production of saturated steam for household environments.

### BACKGROUND OF THE INVENTION

Floor standing boilers of considerable size for generating steam are known for example from documents SE402634, AT237645 and SE342309.

The use of saturated steam is well known in equipment of domestic and professional type, as well as in community facilities, for the treatment of various kinds of products. For example, the introduction of saturated steam into the cooking chamber of a convection oven makes it possible to improve the cooking of food, while its introduction into the washing chamber of a dishwasher makes it possible to sanitize/sterilize tableware and cutlery, thus also avoiding the formation of water spots.

Generally, saturated steam is generated inside a steam generator, consisting of a casing, commonly called furnace of boiler, in which water is brought to boiling temperature of electrical or gas-fired means; the superheated steam that is generated is fed into the treatment chamber in a controlled mode, based on predefined programs that can be preset by the user.

In steam generators of electrical type, the heating means consist of heating elements welded on the bottom and possibly also on the walls of the boiler; otherwise, in gas-fired steam generators, water is heated and brought to the boiling point by means of a gas-fired burner and a heat exchanger that is arranged inside the boiler and in which the combustion gases are circulated.

In general, prior-art steam generators have rather low efficiency values, between 78% and 88%. However, to achieve higher efficiencies, it is not possible to increase their dimensions since the space available in the treatment devices in which the steam generators are incorporated is already very tightly packed.

### SUMMARY OF THE INVENTION

The main objective of the present invention is to overcome the drawbacks of the prior art by providing a gas-fired steam generator that guarantees high efficiency levels.

In the scope of the present objective, one task of the present invention is to propose a gas-fired steam generator appropriate to be installed in equipment for the treatment of food products or tableware, glasses and cutlery, that is compact and thus can be easily accommodated in the technical spaces of said equipment.

Another purpose of the present invention is to devise a gas-fired steam generator that makes it possible to rapidly generate the amount of saturated steam required for its use, for its application in equipment for the treatment of food products or cutlery, glasses and tableware, improving at the same time the energy efficiency of the treatment equipment in which it is fitted.

One not least important objective of the present invention is to provide a gas-fired steam generator that achieves the above purposes and objectives at competitive costs, so that its use is also advantageous from the economic point of view and that can be achieved with the usual, well-known plants, machinery and equipment.

The above objective and purposes, and others that will become more evident below will be achieved with a gas-fired steam generator as defined in claim 1; further characteristics will be defined in subsequent dependent claims.

### BRIEF DESCRIPTION OF THE FIGURES

Advantages and characteristics of the invention will become evident from the description which follows, given by way of a non-limiting example, with reference to the enclosed figures, wherein:
- figures 1 and 2 illustrate, respectively in a perspective and a side view, a steam generator according to a first embodiment of the present invention;
- figure 3 illustrates the steam generator of the previous figures, in a cutout section along plane A-A of figure 2;
- figures 4 and 5 illustrate, respectively in a perspective and a front view, a heat exchanger of a steam generator according to a first embodiment of the present invention;
- figure 6 illustrates the heat exchanger of a steam generator according to a first embodiment of the present invention shown in cross sectioned along plane B-B of figure 5;
- figures 7 and 8 illustrate, respectively in a perspective and a side view a steam generator according to a second embodiment of the present invention;
- figure 9 illustrates the steam generator of the previous figures, in a cutaway view along plane A-A of figure 8;
- figures 10 and 11 illustrate, respectively in a perspective and a front view, a heat exchanger of a steam generator according to the second embodiment of the present invention, and
- figure 12 illustrates the heat exchanger of a steam generator according to the second embodiment of the present invention in a cutaway view along plane B-B of figure 11.

### DESCRIPTION OF THE PREFERRED EMBODIMENTS OF THE INVENTION

With reference to the enclosed figures, a steam generator 1 is illustrated, which is adapted to generate saturated steam used in particular in the treatment of food products or tableware, both domestic or professional or in community facilities.

Said steam generator 1 comprises a casing 2, consisting of a body preferably of parallelepiped shape with a polygonal cross section, extending along a main longitudinal, extension axis X-X, advantageously vertical, and defined substantially by one or more side walls 2A, a top closing wall 2B and a bottom closing wall 2C.

Said casing 2 defines internally a heating and evaporation chamber 3, adapted to be at least partially filled with water to be heated to the steam generating point, and an upper expansion chamber 4, adapted to separate the saturated steam generated in the underlying heating and evaporation chamber 3 from the moving water contained therein, and from which the steam is collected through an appropriate conduit 40 connected to the casing 2 to be, for example, fed into the treatment chamber of the apparatus.

Preferably, said expansion chamber 4 is separated from said heating and evaporation chamber 3 by a partition wall 50 that is partially open to allow the passage of the water vapor in at least one through opening 51.

Preferably, within said expansion chamber 4 and advantageously facing said at least one through opening 51 are provided deflecting elements 51A, arranged and configured so as to prevent particles of liquid water to accidentally enter into said conduit 40.

The casing 2 is also provided with an inlet vent, advantageously formed below said partition wall 50, connected to an inlet conduit 21 controlled by a relative flow regulating valve, through which it is possible to feed the water, for example from the main water supply, into the heating and evaporation chamber 3, so as to maintain a desired filling level even during the production of steam. Preferably, the free surface of the water inside the evaporation chamber 3 is lower than said inlet vent.

Preferably, said steam generator 1 also comprises at least one pair of level control probes 18A, 18B adapted to control the water level inside the heating and evaporation chamber 3 to respectively prevent the excessive filling and the excessive emptying during the steam production phase.

Said level control probes 18A, 18B are preferably positioned in a calm zone 90 located inside said evaporation chamber 3 and in fluid communication with the latter, and separated from it by a partition element 9.

A discharge opening 22 is also advantageously connected to the bottom wall 2C of the casing 2 to allow the exit of the water, when it is necessary to empty the heating and evaporation chamber 3.

Said steam generator 1 also comprises a combustion chamber 6, wherein a premixed gas burner 6A is housed, and a heat exchanger 100 that exchanges the heat between the combustion gases generated by the burner 6A and the water contained in the heating and evaporation chamber 3 so as to raise the water temperature up to the boiling point.

Said combustion chamber 6 is housed inside the heating chamber 3, in a lower zone of the same and near the bottom wall 2C of the casing 2, so as to be completely immersed in the water to be heated; for this purpose, said combustion chamber 6 is defined by a watertight body, that is sealed from the heating and evaporation chamber 3.

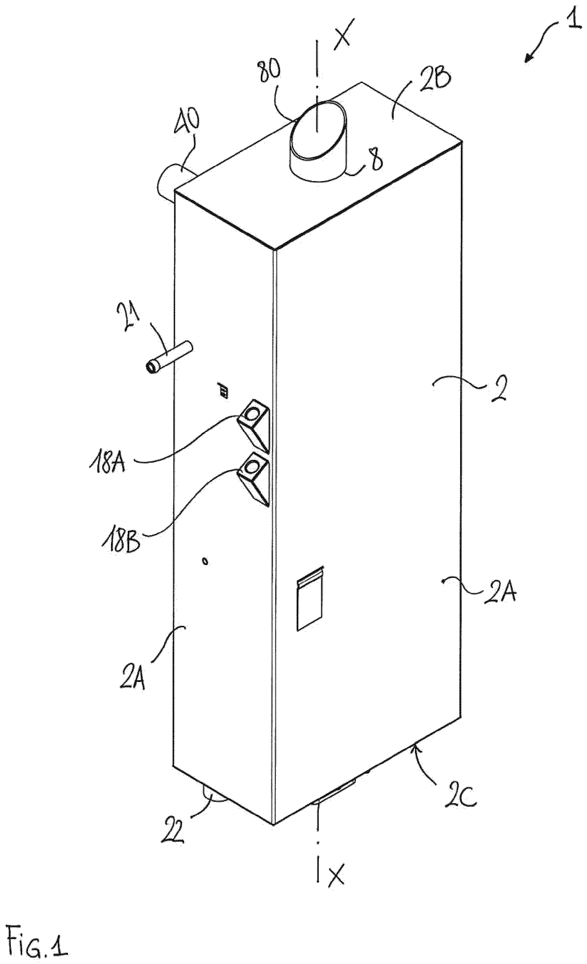

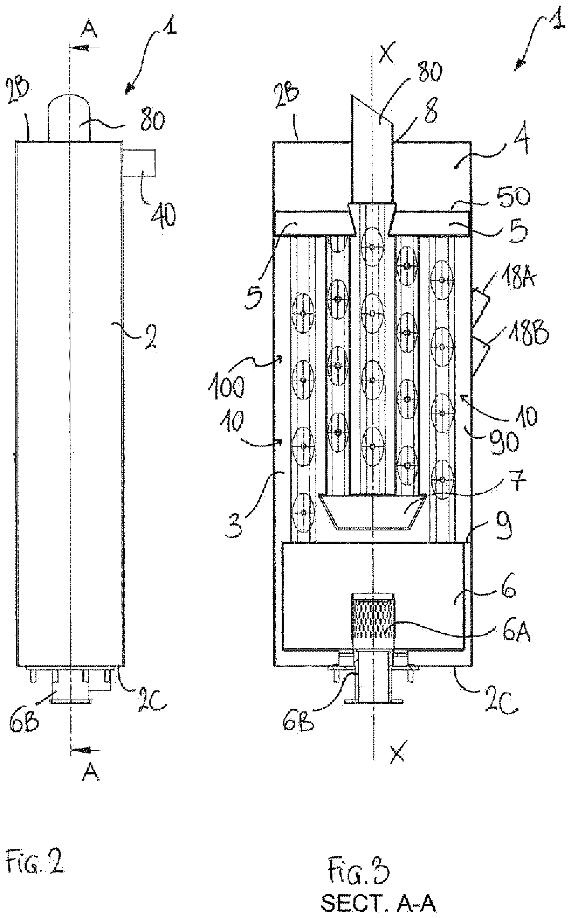

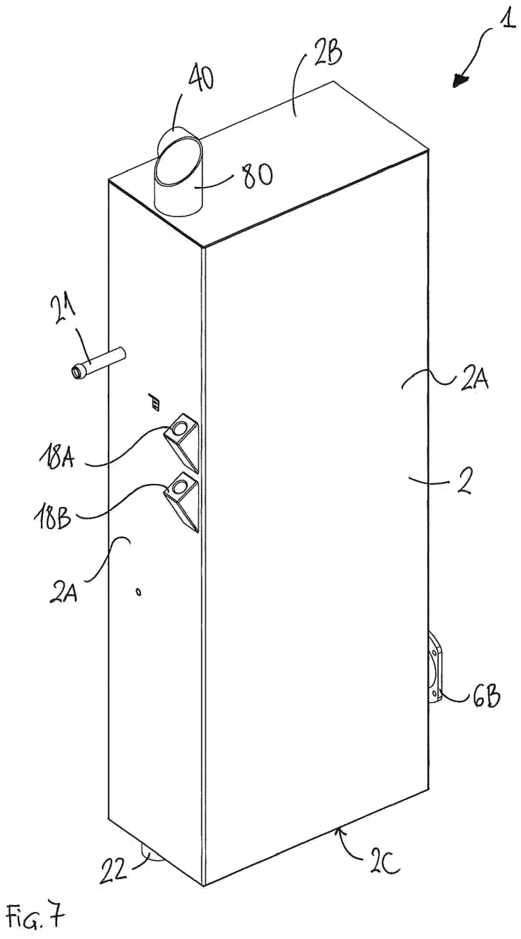

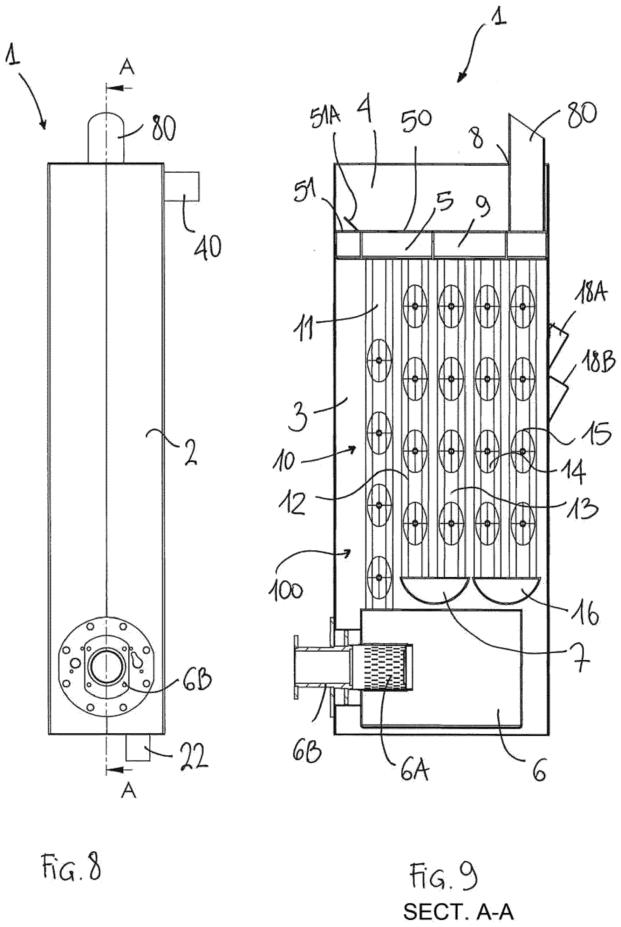

Said burner 6A can advantageously be inserted into the combustion chamber 6 through a relative bushing 6B, having its outlet on the casing 2, for example at the bottom wall 2C of the casing 2, as shown in figures 1 to 6 which refer to the first embodiment of the generator 1, or at a side wall 2A, as shown in figures 7 to 12, which refer to the second embodiment of the invention.

Said heat exchanger 100 extends inside the heating and evaporation chamber 3 between said combustion chamber 6 and a discharge opening 8 formed on said casing 2, preferably in the upper part of the same, for example in said upper closing wall 2B.

According to the present invention, said heat exchanger 100 comprises at least one tube bundle 10 formed by a plurality of tubular portions connected in series by means of at least a pair of return elements 5, 7.

In particular, each tubular portion comprises at least one tube having an extension that is parallel to said longitudinal axis X-X and carries the combustion gases in a flow direction opposite to the flow direction of an adjacent tubular portion.

Preferably, each tubular portion of said at least one tube bundle 10 comprises at least one pair of tubes aligned along a respective plane parallel to said longitudinal axis X-X, said planes being also parallel to each other.

With reference to figures 1 to 6 is illustrated a first embodiment of the present invention, in which said heat exchanger 100 comprises a pair of tube bundles 10 adapted to extend symmetrically from opposite sides with respect to a plane P containing the longitudinal axis X-X of extension of the casing 2.

In this first embodiment, each tube bundle 10 comprises at least one first tubular portion 11, one second tubular portion 12 and a third tubular portion 13, each formed by at least one tube having an extension axis parallel to said longitudinal axis X-X, said tubular portions 11, 12, 13 being connected in series by a pair of return elements 5, 7, and each carrying the combustion gases in a flow direction opposite to the flow direction of an adjacent tubular portion.

Preferably, each tubular portion 11, 12, 13 of each tube bundle 10 comprises at least one pair of tubes arranged in alignment along a respective plane P1, P2, P3 parallel to said plane of symmetry P, said planes being also parallel to each other.

In particular, the tubes that form said first tubular portion 11 are directly connected to said combustion chamber 6 and extend therefrom with an extension parallel to the longitudinal axis X-X and with an ascending flow direction of combustion gases, up to a first return element 5, from which the tubes forming said second tubular portion 12 depart, along an extension parallel to the longitudinal axis X-X and with a downward flow direction of the combustion gases, towards a second return element 7; the tubes forming said third tubular portion 13 are thus connected in series to said second tubular portion 12 through said second return element 7 and extend therefrom with an extension parallel to the longitudinal axis X-X and with an ascending flow direction of the combustion gases.

A discharge duct 80 is thus provided and configured to receive the combustion gases discharged from said heat exchanger 100 and to convey them toward the discharge opening 8, thereby passing through said partition wall 50 and expansion chamber 4.

Said first return element 5 can consist of a single box-shaped body arranged to receive the tubes of said first tubular portion 11 and the tubes of said second tubular portion 12 to return the combustion gases along a 180° course.

According to an advantageous characteristic of the invention, said first return element 5 is integrated inside said partition wall 50, being formed by an internal chamber created therein.

Said second return element 7 is also preferably formed by a single box-shaped hollow body arranged near said combustion chamber 6, as it is preferably completely immersed in the water present in said heating and evaporation chamber 3 so as to increase the thermal exchange surface with the surrounding liquid.

Thanks to the box-shaped form of the return elements 5, 7, the tubes forming the tubular portions of each of said tube bundles 10 can be simply cut at the desired length and connected to the return elements 5, 7, without requiring particular processing.

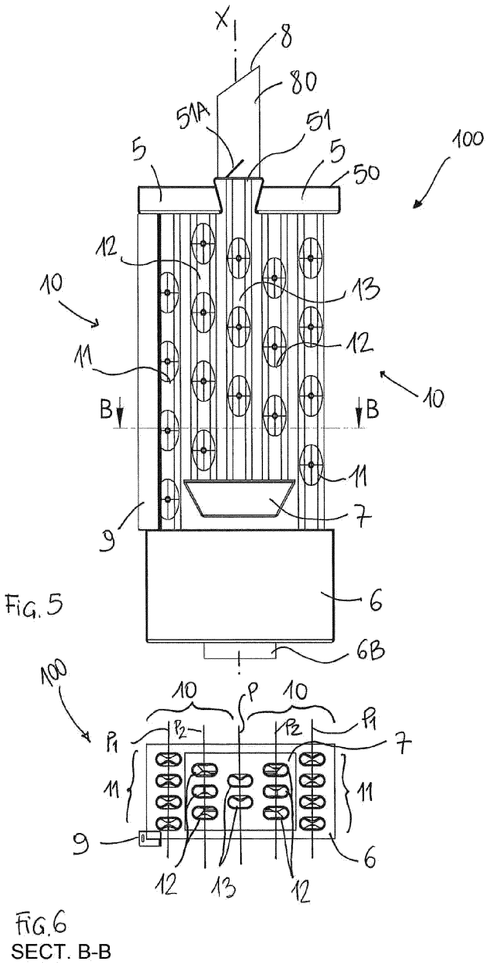

For each tube bundle 10, the number of tubes forming said tubular portions 11, 12, 13 can be constant or, advantageously, decrease; for example, as can be best seen in figure 6 said first tubular portion 11 comprises four tubes, said second tubular portion 12 comprises three, and said third tubular portion 13 comprises two tubes. This is advantageous because it increases the surface available for the heat exchange between the tubes forming the tube bundle, though at the same time it allows the passage therethrough of the combustion gases at an adequate speed.

Furthermore, preferably, the tubular portions 11, 12, 13 are arranged so as to be placed from outside towards the inside of the casing 2; in other words, the tubes of said first tubular portion 11 are arranged externally with respect to the tubes of said second tubular portion 12, i.e. they are nearer to the side walls 2A of the casing 2, and the tubes of said third tubular portion 13 are arranged more internally with respect to those of said second tubular portion 12.

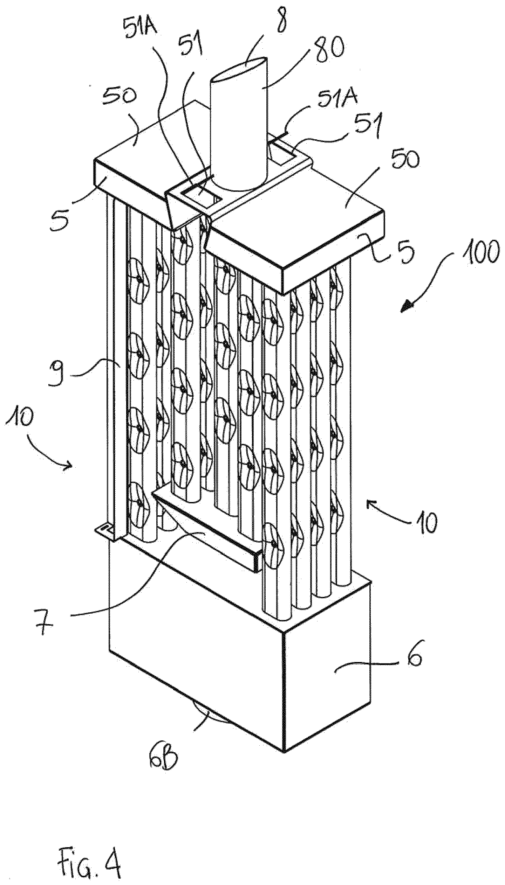

Advantageously, as shown in figures 4, 5 and 6, in order to have a more compact generator 1, said second return element 7 and said third tubular portion 13 can be common to said pair of tube bundles 10; in particular, said second return element 7 is adapted to receive the tubes that form the second tubular portions 12 of both tube bundles 10 of the heat exchanger 100 to return the combustion gases inside a single third tube portion 13 formed preferably by at least one pair of tubes that extends substantially in a central area of the casing 2 and is connected to said discharge duct 80.

In this case, the tubes forming said third tubular portion 13 are preferably arranged aligned along said plane of symmetry P.

Advantageously, the tubes that form the tubular portions 11, 12, 13 each have a cross section shape that is preferably circular, oval, or any other appropriate shape and can be provided with a plurality of embossings. Said tubes can also have a rectilinear extension and can be coaxial with their axis of extension, or can be advantageously helically wound (spiraled) around their axis of extension.

With reference to figures from 7 to 12, is shown a saturated steam generator 1 according to a second embodiment of the present invention. In particular, in this second embodiment the heat exchanger 100 comprises a single tube bundle 10 that is itself made up of a plurality of tubular portions, each formed by at least one tube having an extension axis parallel to said longitudinal axis X-X, said tubular portions being connected in series through at least one pair of return elements 5, 7, and each conveying combustion gases in a flow direction opposite with respect to the flow direction in an adjacent tubular portion.

Preferably, said tube bundle 10 comprises at least a first tubular portion 11, a second tubular portion 12 and a third tubular portion 13, each formed by at least one tube.

Advantageously, each tubular portion 11, 12, 13 of said tube bundle 10 comprises at least one pair of tubes arranged in alignment along a respective plane P1, P2, P3 parallel to said longitudinal axis X-X, said planes being also parallel to each other.

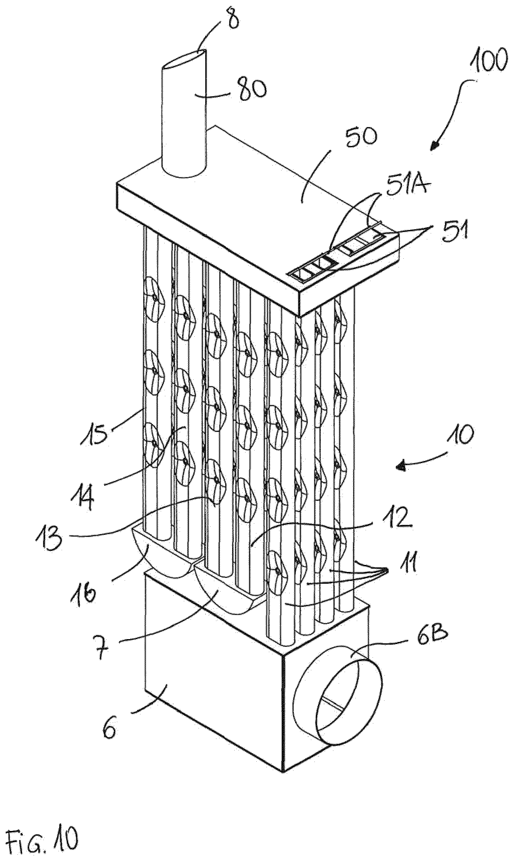

As can be seen in figures 10, 11 and 12, said first tubular portion 11, formed by four tubes arranged side by side along a first plane P1, parallel to said longitudinal axis X-X, extends between said combustion chamber 6, to which the tubes are directly connected, and a first return element 5, said first tubular portion 11 conveying the combustion gases with an ascending flow direction.

From said first return element 5 then branch off the tubes forming a second tubular portion 12, arranged side by side along a plane P2 parallel to said plane P1, and conveying the combustion gases with a descending flow direction, and therefore opposite to the flow direction of the combustion gases in the first tubular portion 11.

Thanks to a second return element 7, said second tubular portion 12 is, in turn, connected in series to a third tubular portion 13, which is also formed by a plurality of tubes arranged in alignment along a plane P3 parallel to the planes P1 and P2 through which flow the combustion gases with an ascending flow direction, and therefore opposite to the flow direction of the gases in the second tubular portion 12.

Said first return element 5 is preferably formed by a box-shaped body, arranged advantageously near said partition wall 50, adapted to receive the combustion gases discharged from said plurality of tubes forming said first tubular portion 11 to return them into the tubes forming said second tubular portion 12.

Advantageously, said return element 5 is provided inside said partition wall 50, and it is formed by an internal chamber of said partition wall 50.

Said second return element 7 is instead advantageously formed by a box-shaped body located near the combustion chamber 6 so as to be preferably completely submerged in the liquid present in the heating and evaporation chamber 3.

In this second embodiment, said tube bundle 10 also comprises a fourth tubular portion 14, formed by a plurality of tubes aligned along a plane P4 and connected to said third tubular portion 13 by means of a third return element 9, itself also preferably formed from a box-shaped body obtained advantageously from an internal chamber formed inside said partition wall 50.

Finally, since said discharge duct 80 is positioned on the top wall 2B of said casing, said tube bundle 10 comprises a fifth tubular portion 15, formed by a plurality of tubes aligned along a plane P5 parallel to the preceding planes P1 - P4 and connected in series to said fourth tubular portion 14 by means of a fourth return element 16, formed by a box-shaped element located near the combustion chamber 6 so as to be completely submerged in the liquid present in the heating and evaporation chamber 3.

Said fifth tubular portion 15 is then connected at the top with a discharge duct 80 that extends through said partition wall 50 and said expansion chamber 4, and crosses the discharge opening 8 to discharge the combustion gases from the steam generator 1.

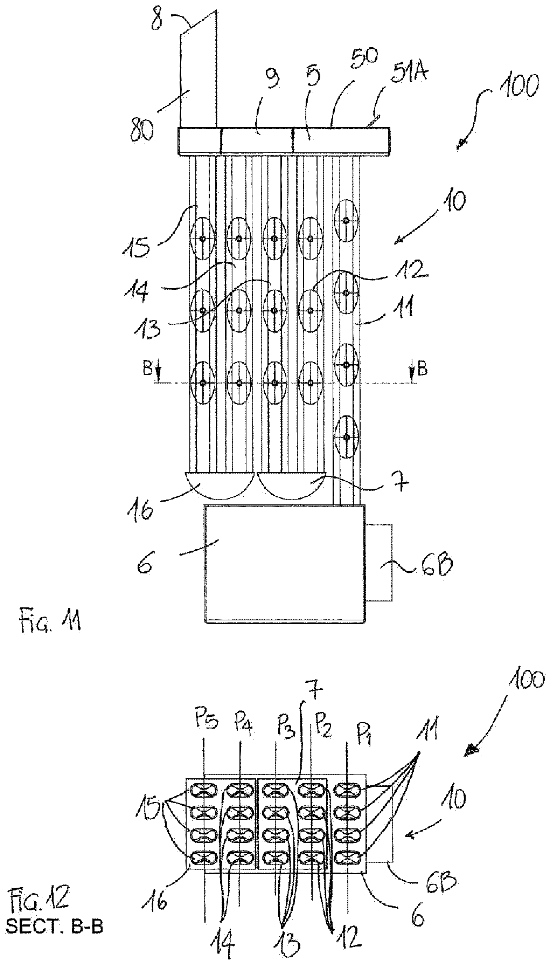

As can be seen in particular in figure 12, each tubular portion 11, 12, 13, 14, 15 comprises the same number of tubes, to maximize the exchange surface and make the most of the internal space of the evaporation chamber 3; in a variant embodiment not shown in the figures, the plurality of tubular portions forming said tube bundle 10 could comprise a different number of tubes.

Advantageously, the tubes that form the tubular portions 11, 12, 13, 14, 15 of said tube bundle 10 each have a preferably circular or oval cross section, or possibly any other appropriate shape, and can be provided with a plurality of embossings. Said tubes can also have a rectilinear extension and can be coaxial with their axis of extension, or can be advantageously spiraled around their axis of extension.

From the above, it is evident how a gas-fired steam generator 1 according to the present invention, thanks to some technical devices advantageous in the construction of the heat exchanger, is quite compact; at the same time, however, laboratory tests have shown that despite the extreme compactness of the steam generator, the indirect efficiency from the combustion gases achieves values between 91% and 94%, with a clear improvement in efficiency compared to gas-fired steam generators for treatment equipment currently available on the market.

In fact, thanks to the particular configuration of the heat exchanger 100 of the present invention, the extension of the tubes into the heating and evaporation chamber 3 increases considerably, and consequently the heat exchange surface also increases, making it possible to also increase the efficiency of the heat exchange between the combustion gases and the surrounding liquid. At the same time, the precise arrangement of the tubes of the heat exchanger 100 makes it possible to contain its dimensions as much as possible, making the best and most rational use of the available space.

Further compactness is made possible if at least a first return element of the heat exchanger is housed inside the partition wall 50 provided between the heating and evaporation chamber 3 and the expansion chamber 4, since in this way a component element of the heat exchanger 100 and an element necessary for the operation of the generator 1 are obtained in a single piece.

Furthermore, a steam generator 1 according to the present invention is capable of generating quite rapidly an amount of saturated steam that is sufficient for the use required in the treatment equipment to which it is associated, such as for example cooking ovens or dishwashers, thus making it possible to improve their overall performance, both in terms of energy and in practical/functional terms.

It is pointed out that in the preceding description, the directional terms such as "above, below, vertical, horizontal, lower and upper", like any other similar terms, should be interpreted with reference to a steam generator in its normal operating condition, as shown in the enclosed figures.

In addition, the materials and equipment used to realize the present invention, as well as the shapes and dimensions of the individual components, can be the most appropriate to meet the specific requirements.

## Claims

1. Steam generator (1) adapted to generate saturated steam and to be incorporated in an apparatus for treating food products or tableware, said generator (1) comprising:
- a casing (2) formed by a body having main extension along a longitudinal axis (X-X) and defining a heating and evaporation chamber (3) adapted to be at least partially filled with water and an upper expansion chamber (4) adapted to collect the saturated water steam generated in said heating and evaporation chamber (3),
- a combustion chamber (6) wherein a gas burner (6A) is housed, and
- a heat exchanger (100) which develops inside said heating and evaporation chamber (3) between said combustion chamber (6) and a discharge opening (8) provided on said casing (2),
said heat exchanger (100) comprises at least one tube bundle (10) comprising a plurality of tubular portions (11, 12, 13) each formed by at least one tube having an extension axis parallel to said vertical axis (X-X), said plurality of tubular portions (11, 12, 13) being connected in series through at least a pair of return elements (5, 7) and each adapted to be traversed by combustion gases in a flowing direction opposite to a flowing direction of an adjacent tubular portion,
wherein said burner is a premixed burner, said combustion chamber (6) being housed inside a lower zone of the heating and evaporation chamber (3) and near a bottom wall of the casing (2), so as to be completely immersed in the water to be heated, and being defined by a watertight body, sealed from the heating and evaporation chamber (3).

2. Steam generator (1) according to claim 1, wherein each tubular portion (11, 12, 13) comprises at least a pair of tubes aligned along a respective plane (P1, P2, P3) parallel to said longitudinal axis (X-X), said planes (P1, P2, P3) being also parallel to each other.

3. Steam generator (1) according to any one of the preceding claims, wherein said heating and evaporation chamber (3) and said expansion chamber (4) are separated by a partition wall (50) partially opened to allow the passage of the steam.

4. Steam generator (1) according to claim 3, wherein a first return element (5) of said at least a pair of return elements (5, 7) arranged to connect in series a first tubular portion (11) and a second tubular portion (12) is formed in an internal chamber of said partition wall (50).

5. Steam generator (1) according to any of the preceding claims, wherein a second return element (7) of said pair of return elements (5, 7) is arranged so as to connect in series a second tubular portion (12) to a third tubular portion (13), said second return element (7) being formed by a box-shaped body disposed near to said combustion chamber (6) and arranged so as to be completely immersed in water of said heating and evaporation chamber (3).

6. Steam generator (1) according to any one of the preceding claims, wherein said at least one tube of said plurality of tubular portions has a rectilinear extension.

7. Steam generator (1) according to any one of claims 1 to 5, wherein said at least one tube of said plurality of tubular portions is helically wound around its extension axis.

8. Steam generator (1) according to any one of the preceding claims, wherein said heat exchanger (100) comprises a single tube bundle (10) comprising a plurality of tubular portions (11, 12, 13, 14, 15) each formed by a plurality of tubes aligned along respective parallel planes (P1, P2, P3, P4, P5).

9. Steam generator (1) according to claim 8, wherein said plurality of tubular portions comprise the same number of tubes.

10. Steam generator (1) according to any one of claims 1 to 7, wherein said heat exchanger (100) comprises a pair of tube bundles (10) extending symmetrically from opposite sides with respect to a plane (P) containing said longitudinal axis (X-X), each of said tube bundles (10) comprising a plurality of tubular portions.

11. Steam generator (1) according to claim 10, wherein for each tube bundle (10), a first tubular portion (11) is arranged externally with respect to a second tubular portion (12) and said second tubular portion (12 ) and arranged externally with respect to a third tubular portion (13).

12. Steam generator (1) according to claim 11, wherein said second return element (7) and said third tubular portion (13) are in common between said pair of tube bundles (10).

13. Steam generator (1) according to any one of claims 10 to 12, wherein each of said plurality of tubular portions comprises a decreasing or constant number of tubes.

14. Apparatus for treating food products or tableware comprising a steam generator (1) according to any one of the preceding claims.

## Patentansprüche

1. Dampferzeuger (1), der dazu eingerichtet ist, gesättigten Dampf zu erzeugen und in eine Vorrichtung zur Behandlung von Nahrungsmitteln oder Geschirr und Besteck eingebaut zu werden, wobei der Erzeuger (1) umfasst:
- ein Gehäuse (2), das aus einem Körper besteht, der eine Haupterstreckung entlang einer Längsachse (X-X) aufweist und eine Heiz- und Verdampfungskammer (3) definiert, die dazu eingerichtet ist, zumindest teilweise mit Wasser gefüllt zu werden, und eine obere Expansionskammer (4), die dazu eingerichtet ist, den in der Heiz- und Verdampfungskammer (3) erzeugten gesättigten Wasserdampf aufzufangen,
- eine Brennkammer (6), in der ein Gasbrenner (6A) untergebracht ist, und
- einen Wärmetauscher (100), der sich im Inneren der Heiz- und Verdampfungskammer (3) zwischen der Brennkammer (6) und einer an dem Gehäuse (2) vorgesehenen Auslassöffnung (8) entwickelt,
wobei der Wärmetauscher (100) mindestens ein Rohrbündel (10) umfasst, das eine Vielzahl von rohrförmigen Abschnitten (11, 12, 13) umfasst, die jeweils durch mindestens ein Rohr mit einer zur vertikalen Achse (X-X) parallelen Ausdehnungsachse gebildet werden, wobei die Vielzahl von rohrförmigen Abschnitten (11, 12, 13) durch mindestens ein Paar von Rücklaufelementen (5, 7) in Reihe verbunden sind und jeweils dazu eingerichtet sind, von Verbrennungsgasen in einer Strömungsrichtung durchströmt zu werden, die einer Strömungsrichtung eines benachbarten rohrförmigen Abschnitts entgegengesetzt ist,
wobei der Brenner ein Vormischbrenner ist, wobei die Brennkammer (6) in einem unteren Bereich der Heiz- und Verdampfungskammer (3) und in der Nähe einer Bodenwand des Gehäuses (2) untergebracht ist, so dass sie vollständig in das zu erhitzende Wasser eingetaucht ist, und von einem wasserdichten Körper definiert wird, der gegenüber der Heiz- und Verdampfungskammer (3) abgedichtet ist.

2. Dampferzeuger (1) nach Anspruch 1, wobei jeder rohrförmige Abschnitt (11, 12, 13) mindestens ein Paar von Rohren umfasst, die entlang einer jeweiligen Ebene (P1, P2, P3) parallel zu der Längsachse (X-X) ausgerichtet sind, wobei die Ebenen (P1, P2, P3) auch parallel zueinander sind.

3. Dampferzeuger (1) nach einem der vorhergehenden Ansprüche, wobei die Heiz- und Verdampfungskammer (3) und die Expansionskammer (4) durch eine Trennwand (50) getrennt sind, die teilweise geöffnet ist, um den Durchgang des Dampfes zu ermöglichen.

4. Dampferzeuger (1) nach Anspruch 3, wobei ein erstes Rücklaufelement (5) des mindestens einen Paares von Rücklaufelementen (5, 7), die so angeordnet sind, dass sie einen ersten rohrförmigen Abschnitt (11) und einen zweiten rohrförmigen Abschnitt (12) in Reihe verbinden, in einer Innenkammer der Trennwand (50) ausgebildet ist.

5. Dampferzeuger (1) nach einem der vorhergehenden Ansprüche, wobei ein zweites Rücklaufelement (7) des Paares von Rücklaufelementen (5, 7) so angeordnet ist, dass es einen zweiten rohrförmigen Abschnitt (12) mit einem dritten rohrförmigen Abschnitt (13) in Reihe verbindet, wobei das zweite Rücklaufelement (7) durch einen kastenförmigen Körper gebildet wird, der in der Nähe der Brennkammer (6) angeordnet und dazu eingerichtet ist, vollständig in Wasser der Heiz- und Verdampfungskammer (3) eingetaucht zu werden.

6. Dampferzeuger (1) nach einem der vorhergehenden Ansprüche, wobei das mindestens eine Rohr der Vielzahl von rohrförmigen Abschnitten eine geradlinige Ausdehnung hat.

7. Dampferzeuger (1) nach einem der Ansprüche 1 bis 5, wobei das mindestens eine Rohr der Vielzahl von Rohrabschnitten schraubenförmig um seine Ausdehnungsachse gewickelt ist.

8. Dampferzeuger (1) nach einem der vorhergehenden Ansprüche, wobei der Wärmetauscher (100) ein einzelnes Rohrbündel (10) umfasst, das eine Vielzahl von rohrförmigen Abschnitten (11, 12, 13, 14, 15) umfasst, die jeweils durch eine Vielzahl von Rohren gebildet werden, welche entlang entsprechender paralleler Ebenen (P1, P2, P3, P4, P5) ausgerichtet sind.

9. Dampferzeuger (1) nach Anspruch 8, wobei die Vielzahl von rohrförmigen Abschnitten die gleiche Anzahl von Rohren umfasst.

10. Dampferzeuger (1) nach einem der Ansprüche 1 bis 7, wobei der Wärmetauscher (100) ein Paar von Rohrbündeln (10) umfasst, die sich symmetrisch von gegenüberliegenden Seiten in Bezug auf eine Ebene (P) erstrecken, welche die Längsachse (X-X) enthält, wobei jedes der Rohrbündel (10) eine Vielzahl von rohrförmigen Abschnitten umfasst.

11. Dampferzeuger (1) nach Anspruch 10, wobei für jedes Rohrbündel (10) ein erster rohrförmiger Abschnitt (11) außerhalb eines zweiten rohrförmigen Abschnitts (12) angeordnet ist und der zweite rohrförmige Abschnitt (12) außerhalb eines dritten rohrförmigen Abschnitts (13) angeordnet ist.

12. Dampferzeuger (1) nach Anspruch 11, wobei das zweite Rücklaufelement (7) und der dritte Rohrabschnitt (13) zwischen dem Paar von Rohrbündeln (10) gemeinsam sind.

13. Dampferzeuger (1) nacheinem der Ansprüche 10-12, wobei jeder der Vielzahl von rohrförmigen Abschnitten eine abnehmende oder konstante Anzahl von Rohren umfasst.

14. Vorrichtung zur Behandlung von Nahrungsmitteln oder Geschirr und Besteck mit einem Dampferzeuger (1) nach einem der vorhergehenden Ansprüche.

## Revendications

1. - Générateur de vapeur (1) agencé pour générer de la vapeur saturée et pour être incorporé dans un appareil de traitement de produits alimentaires ou de vaisselle, ledit générateur (1) comprenant :
- une enveloppe (2) formée d'un corps ayant une extension principale le long d'un axe longitudinal (X-X) et définissant une chambre de chauffe et d'évaporation (3) agencée pour être au moins partiellement remplie d'eau et une chambre de détente supérieure (4) agencée pour collecter la vapeur d'eau saturée générée dans ladite chambre de chauffe et d'évaporation (3),
- une chambre de combustion (6) dans laquelle un brûleur à gaz (6A) est reçu, et
- un échangeur de chaleur (100) qui se développe à l'intérieur de ladite chambre de chauffe et d'évaporation (3) entre ladite chambre de combustion (6) et une ouverture de décharge (8) prévue sur ladite enveloppe (2),
ledit échangeur de chaleur (100) comprend au moins un faisceau de tubes (10) comprenant une pluralité de parties tubulaires (11, 12, 13) formées chacune par au moins un tube ayant un axe d'extension parallèle audit axe vertical (X-X), ladite pluralité de parties tubulaires (11, 12, 13) étant reliées en série par l'intermédiaire d'au moins une paire d'éléments de retour (5, 7) et étant chacune agencées pour être traversées par des gaz de combustion dans une direction d'écoulement opposée à une direction d'écoulement d'une partie tubulaire adjacente,
ledit brûleur étant un brûleur à prémélange, ladite chambre de combustion (6) étant reçue à l'intérieur d'une zone inférieure de la chambre de chauffe et d'évaporation (3) et près d'une paroi inférieure de l'enveloppe (2), de façon à être complètement immergée dans l'eau à chauffer, et étant définie par un corps étanche à l'eau, isolé de la chambre de chauffe et d'évaporation (3).

2. - Générateur de vapeur (1) selon la revendication 1, dans lequel chaque partie tubulaire (11, 12, 13) comprend au moins une paire de tubes alignés le long d'un plan respectif (P1, P2, P3) parallèle audit axe longitudinal (X-X), lesdits plans (P1, P2, P3) étant également parallèles les uns aux autres.

3. - Générateur de vapeur (1) selon l'une quelconque des revendications précédentes, dans lequel ladite chambre de chauffe et d'évaporation (3) et ladite chambre de détente (4) sont séparées par une cloison (50) partiellement ouverte pour permettre le passage de la vapeur.

4. - Générateur de vapeur (1) selon la revendication 3, dans lequel un premier élément de retour (5) de ladite au moins une paire d'éléments de retour (5, 7), agencé pour relier en série une première partie tubulaire (11) et une deuxième partie tubulaire (12), est formé dans une chambre interne de ladite cloison (50).

5. - Générateur de vapeur (1) selon l'une quelconque des revendications précédentes, dans lequel un second élément de retour (7) de ladite paire d'éléments de retour (5, 7) est agencé de façon à relier en série une deuxième partie tubulaire (12) à une troisième partie tubulaire (13), ledit second élément de retour (7) étant formé par un corps en forme de boîte disposé à proximité de ladite chambre de combustion (6) et agencé pour être complètement immergé dans l'eau de ladite chambre de chauffe et d'évaporation (3).

6. - Générateur de vapeur (1) selon l'une quelconque des revendications précédentes, dans lequel ledit au moins un tube de ladite pluralité de parties tubulaires a une extension rectiligne.

7. - Générateur de vapeur (1) selon l'une quelconque des revendications 1 à 5, dans lequel ledit au moins un tube de ladite pluralité de parties tubulaires est enroulé de manière hélicoïdale autour de son axe d'extension.

8. - Générateur de vapeur (1) selon l'une quelconque des revendications précédentes, dans lequel ledit échangeur de chaleur (100) comprend un seul faisceau de tubes (10) comprenant une pluralité de parties tubulaires (11, 12, 13, 14, 15) formées chacune par une pluralité de tubes alignés le long de plans parallèles respectifs (P1, P2, P3, P4, P5).

9. - Générateur de vapeur (1) selon la revendication 8, dans lequel ladite pluralité de parties tubulaires comprennent le même nombre de tubes.

10. - Générateur de vapeur (1) selon l'une quelconque des revendications 1 à 7, dans lequel ledit échangeur de chaleur (100) comprend une paire de faisceaux de tubes (10) s'étendant de manière symétrique à partir de côtés opposés par rapport à un plan (P) contenant ledit axe longitudinal (X-X), chacun desdits faisceaux de tubes (10) comprenant une pluralité de parties tubulaires.

11. - Générateur de vapeur (1) selon la revendication 10, dans lequel, pour chaque faisceau de tubes (10), une première partie tubulaire (11) est disposée extérieurement par rapport à une deuxième partie tubulaire (12) et ladite deuxième partie tubulaire (12) est disposée extérieurement par rapport à une troisième partie tubulaire (13) .

12. - Générateur de vapeur (1) selon la revendication 11, dans lequel ledit second élément de retour (7) et ladite troisième partie tubulaire (13) sont communs entre ladite paire de faisceaux de tubes (10).

13. - Générateur de vapeur (1) selon l'une quelconque des revendications 10 à 12, dans lequel chacune de ladite pluralité de parties tubulaires comprend un nombre décroissant ou constant de tubes.

14. - Appareil de traitement de produits alimentaires ou de vaisselle comprenant un générateur de vapeur (1) selon l'une quelconque des revendications précédentes.
